# EUROPEAN PATENT APPLICATION

(11) **EP 4 814 539 A1**
(43) Date of publication of application: **30.09.2026**
(21) Application number: 26166012.0
(22) Date of filing: 19.03.2026
(51) Int. Cl.: G01S 15/10, G01S 15/34, G01S 15/58, G01S 15/931, G01S 7/536

(54) **OBJECT DETECTION DEVICE AND PROGRAM**

(30) Priority: 26.03.2025 JP 2025051010
(71) Applicant: AISIN CORPORATION, Kariya, Aichi 448-8650 (JP)
(72) Inventor: SUGAE, Ippei, Kariya, Aichi, 448-8650 (JP); HASEGAWA, Daiki, Kariya, Aichi, 448-8650 (JP)
(74) Representative: TBK

(57) **Abstract**

An object detection device (200) as an example of the present disclosure is an object detection device (200) mounted on a moving body and includes: a transmission/reception unit (21) that transmits a transmission wave of an ultrasonic wave and receives a reception wave including a reflected wave based on the transmission wave; and a calculation unit (203) that calculates a Doppler shift amount by using a transmission reverberation frequency based on a waveform in a reverberation period of the transmission wave and a reception reverberation frequency based on a waveform in a reverberation period of the reception wave.

## Description

### TECHNICAL FIELD

The present disclosure relates to an object detection device and a program.

### BACKGROUND DISCUSSION

For example, it is known that a Doppler sonar receives a reflected wave generated by reflection of a transmission wave transmitted from a ship to a bottom of a body of water, and estimates a frequency by analyzing a spectrum signal of the reflected wave (see JP 3881078 B2).

However, for example, in a case where the transmission wave is a chirp wave or the like in which the frequency fluctuates, it is difficult to estimate a maximum value and a minimum value of the frequency even if the reflected wave is analyzed, and it may therefore be difficult to calculate the Doppler shift amount.

A need thus exists for an object detection device and a program that are capable of improving estimation accuracy of a Doppler shift amount.

### SUMMARY

An object detection device as an example of the present disclosure is an object detection device mounted on a moving body and includes: a transmission/reception unit that transmits a transmission wave of an ultrasonic wave and receives a reception wave including a reflected wave based on the transmission wave; and a calculation unit that calculates a Doppler shift amount by using a transmission reverberation frequency based on a waveform in a reverberation period of the transmission wave and a reception reverberation frequency based on a waveform in a reverberation period of the reception wave.

With the object detection device of the present disclosure, estimation accuracy of the Doppler shift amount can be improved by using the reverberation frequencies.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a top view illustrating an example of a configuration of a vehicle according to an embodiment;
Fig. 2 is a block diagram illustrating an example of a hardware configuration of the vehicle control system according to the embodiment;
Fig. 3 is a diagram illustrating an example of a method of calculating a distance by a TOF method;
Fig. 4 is a block diagram illustrating an example of a functional configuration of the object detection device according to the embodiment;
Fig. 5 is a diagram illustrating an example of a transmission waveform according to the embodiment;
Fig. 6 is a diagram illustrating an example of a frequency-analyzed waveform according to the embodiment; and
Fig. 7 is a flowchart illustrating Doppler shift amount calculation processing according to the embodiment.

### DETAILED DESCRIPTION

Hereinafter, an embodiment of the present disclosure will be described with reference to the drawings. The configurations of the embodiment and the modified examples described below and the actions and effects provided by the configurations are merely examples, and the present disclosure is not limited to the contents described below.

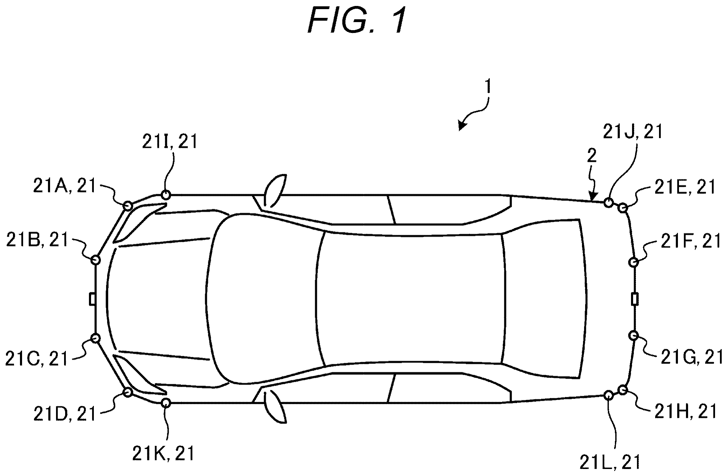

Fig. 1 is a top view illustrating an example of a configuration of a vehicle 1 according to the embodiment. The vehicle 1 is an example of a moving body on which the object detection device is mounted. However, the moving body is not limited to the vehicle 1. The moving body may be a drone, a ship, or the like.

The object detection device according to the present embodiment is a device that detects an object present around the vehicle 1 on the basis of information such as a time of flight (TOF) and a Doppler shift amount acquired by transmitting a transmission wave and receiving a reception wave (reflected wave) generated by reflection of the transmission wave by the object.

The object detection device includes a plurality of transmission/reception units 21A to 21L (hereinafter, the plurality of transmission/reception units 21A to 21L will be abbreviated as the transmission/reception units 21 in a case where it is not necessary to distinguish between the plurality of transmission/reception units 21A to 21L). Each transmission/reception unit 21 is installed on a vehicle body 2 as an exterior of the vehicle 1. Each transmission/reception unit 21 transmits an ultrasonic wave (an example of a transmission wave) toward the outside of the vehicle body 2, and receives as a reception wave a reflected wave from an object present outside the vehicle body 2.

In the example illustrated in Fig. 1, four transmission/reception units 21A to 21D are disposed on a front end portion of the vehicle body 2, four transmission/reception units 21E to 21H are disposed on a rear end portion, two transmission/reception units 211 and 21J are disposed on a right side surface portion, and two transmission/reception units 21K and 21L are disposed on a left side surface portion. Note that the number and installation positions of the transmission/reception units 21 are not limited to the above example.

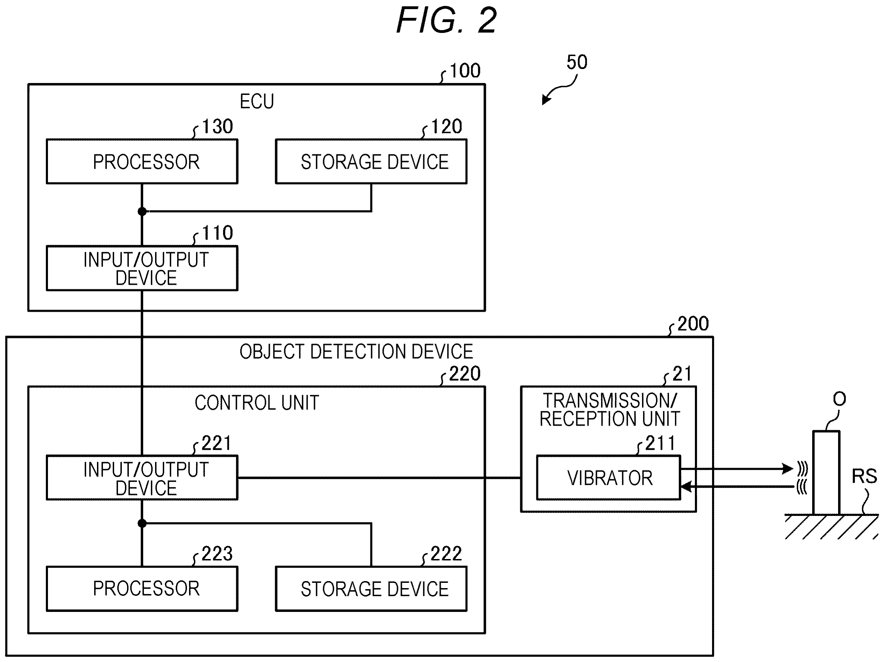

Fig. 2 is a block diagram illustrating an example of a hardware configuration of a vehicle control system 50 according to the embodiment. The vehicle control system 50 performs processing for controlling the vehicle 1 on the basis of information that is output from an object detection device 200. The vehicle control system 50 according to the present embodiment includes an ECU 100 and the object detection device 200.

The object detection device 200 includes the plurality of transmission/reception units 21 and a control unit 220. Each transmission/reception unit 21 includes a vibrator 211 configured using a piezoelectric element or the like, an amplifier, and the like, and realizes transmission and reception of an ultrasonic wave on the basis of vibration of the vibrator 211.

Specifically, each transmission/reception unit 21 transmits as a transmission wave an ultrasonic wave generated in response to the vibration of the vibrator 211, and performs reception simultaneously with the transmission of the transmission wave. In addition, the transmission/reception unit 21 detects vibration of the vibrator 211 caused by a reflected wave (reception wave) generated by reflection of the transmission wave by an object such as an obstacle O or a road surface RS.

The vibration of the vibrator 211 is converted into an electric signal, and a TOF corresponding to the distance from the transmission/reception unit 21 to the obstacle O, the Doppler shift amount corresponding to the relative speed of the obstacle O, and the like can be acquired on the basis of the electric signal. The obstacle O is an example of the object.

Note that the example illustrated in Fig. 2 exemplifies a configuration in which transmission of a transmission wave and reception of a reception wave are both performed using a single vibrator 211, but the configuration of the transmission/reception units 21 is not limited to this example. For example, as in a configuration in which a vibrator for transmitting a transmission wave and a vibrator for receiving a reception wave are separately provided, the transmission side and the reception side may be separated.

The control unit 220 includes an input/output device 221, a storage device 222, and a processor 223. The input/output device 221 is an interface device to realize transmission and reception of information between the control unit 220 and the outside (the transmission/reception units 21, the ECU 100, and the like).

The storage device 222 includes a main storage device such as a read only memory (ROM) or a random access memory (RAM) and an auxiliary storage device such as a hard disk drive (HDD) or a solid state drive (SSD).

The processor 223 is an integrated circuit that performs various types of processing for realizing functions of the control unit 220, and can be configured using, for example, a central processing unit (CPU) that operates according to a program and an application specific integrated circuit (ASIC) designed for a specific application. The processor 223 performs various types of arithmetic processing and control processing by reading out a program stored in the storage device 222 and executing the program.

The ECU 100 is a unit that performs various types of processing for controlling the vehicle 1 on the basis of various types of information acquired from the object detection device 200 and the like. The ECU 100 includes an input/output device 110, a storage device 120, and a processor 130.

The input/output device 110 is an interface device to enable transmission and reception of information between the ECU 100 and external mechanisms (the object detection device 200, a drive mechanism, a brake mechanism, a steering mechanism, a shift mechanism, an in-vehicle display, a speaker, various sensors, and the like.).

The storage device 120 includes a main storage device such as a ROM and a RAM, and an auxiliary storage device such as an HDD or an SSD. The processor 130 is an integrated circuit that performs various types of processing for realizing functions of the ECU 100, and can be configured using, for example, a CPU or an ASIC. The processor 130 reads a program stored in the storage device 120 and performs various types of arithmetic processing and control processing.

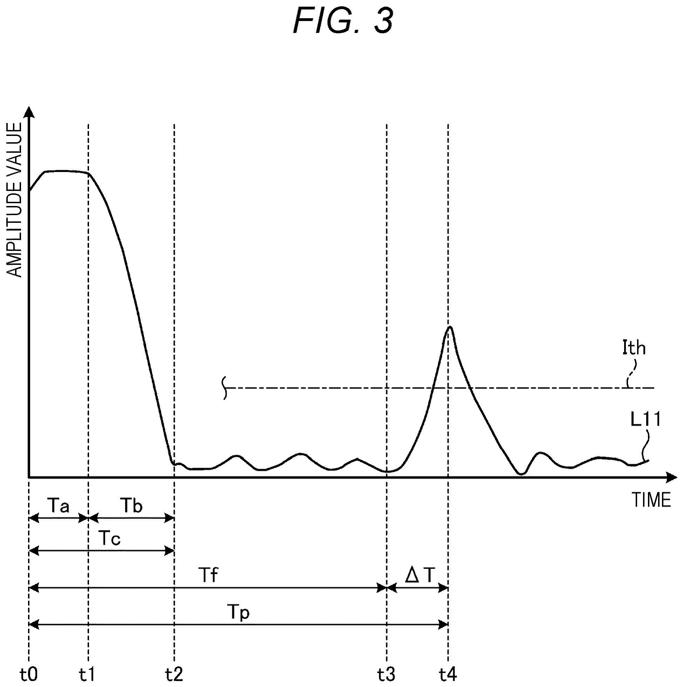

Fig. 3 is a diagram illustrating an example of a method of calculating a distance by a TOF method. Fig. 3 illustrates an envelope L11 (echo information) indicating a temporal change in an amplitude value (signal intensity: signal level) of an ultrasonic wave transmitted and received by the transmission/reception unit 21. In the graph illustrated in Fig. 3, the horizontal axis represents time, and the vertical axis represents an amplitude value of an ultrasonic wave transmitted and received by the transmission/reception unit 21 (a magnitude of a vibration of the vibrator 211).

An envelope L11 indicates a temporal change in the amplitude value indicating the magnitude of the vibration of the vibrator 211. From the envelope L11 exemplified in Fig. 3, the following can be read. The vibrator 211 is driven and vibrates from timing t0 for a transmission period Ta, the transmission of the transmission wave is therefore finished at timing t1, and then the vibration of the vibrator 211 caused by inertia continues for a reverberation period Tb until timing t2 while attenuating.

Therefore, in the graph illustrated in Fig. 3, the reverberation period Tb is a period from the time point when the transmission of the transmission wave is completed until the vibration due to inertia of the vibrator 211 decreases to a reverberation threshold value or less. Of the transmission wave, a signal transmitted in the reverberation period Tb is defined as a transmission reverberation signal. A frequency obtained by Fourier transforming a waveform in the reverberation period Tb (that is, the waveform measured from the vibrator 211 in the reverberation period Tb) of the transmission wave is a transmission reverberation frequency.

The reverberation threshold value is smaller than a detection threshold value Ith. Furthermore, a period constituted by the transmission period Ta and the reverberation period Tb is defined as a total transmission period Tc.

At timing t4 at which a period Tp elapsed after timing t0 at which the transmission of the transmission wave is started, the envelope L11 reaches a peak at which the magnitude of the vibration of the vibrator 211 becomes equal to or larger than the detection threshold value Ith. The detection threshold value Ith is a value set to identify whether the vibration of the vibrator 211 is caused by reception of the reception wave from the obstacle O (other vehicles, structures, pedestrians, or the like) or is caused by reception of the reception wave from an object other than the obstacle O (for example, the road surface RS) or the like.

Here, the detection threshold value Ith is illustrated as a constant value, but the detection threshold value Ith may be a variation value that varies depending on a situation. A vibration having a peak equal to or higher than the detection threshold value Ith can be considered to be caused by reception of the reception wave from the obstacle O.

The envelope L11 of the present embodiment indicates that the vibration of the vibrator 211 has attenuated after timing t4. Therefore, timing t4 corresponds to timing at which the reception of the reception wave from the obstacle O is completed, in other words, timing at which the transmission wave transmitted last at timing t1 returns as a reception wave. A period after timing t4 is defined as a reception reverberation period of the reception wave.

The reception reverberation period is a period in which the vibration of the vibrator 211 after receiving the reflected wave attenuates. A signal detected in the reception reverberation period is defined as a reception reverberation signal. A frequency obtained by Fourier transforming a waveform in the reception reverberation period (that is, the waveform measured from the vibrator 211 in the reception reverberation period) of the reception wave is a reception reverberation frequency.

In the envelope L11, timing t3 that is a start point of the peak at timing t4 corresponds to timing at which reception of the reception wave from the obstacle O starts, in other words, timing at which the transmission wave transmitted first at timing t0 returns as a reception wave. Therefore, a period ΔT between timing t3 and timing t4 is equal to the transmission period Ta of the transmission wave.

From the above, in order to obtain the distance from a transmission/reception source of an ultrasonic wave to the obstacle O using the TOF, it is necessary to obtain a period Tf between timing t0 at which the transmission wave starts to be transmitted and timing t3 at which the reception wave starts to be received. The period Tf can be obtained by subtracting the period ΔT equal to the transmission period Ta from the period Tp as a difference between timing t0 and timing t4 at which the amplitude value of the reception wave reaches the peak at which the amplitude value of the reception wave becomes equal to or larger than the detection threshold value Ith.

Timing t0 at which the transmission wave starts to be transmitted can be easily determined as timing at which the object detection device 200 starts operation, and the transmission period Ta of the transmission wave is previously determined by setting or the like. Therefore, the distance from the transmission/reception source to the obstacle O can be obtained by determining timing t4 at which the amplitude value of the reception wave reaches the peak at which the amplitude value of the reception wave becomes equal to or larger than the detection threshold value Ith.

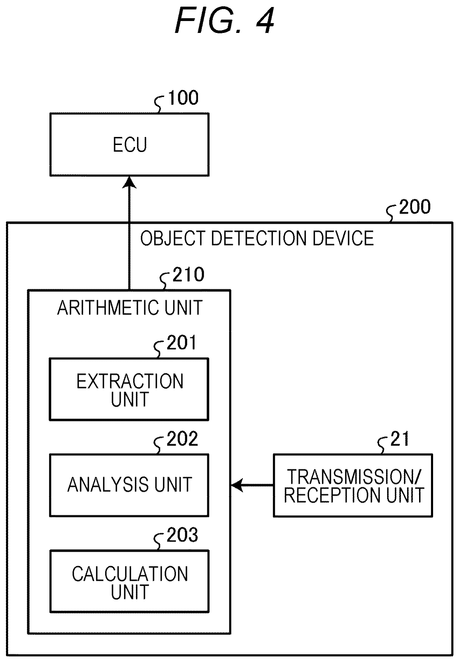

Fig. 4 is a block diagram illustrating an example of a functional configuration of the object detection device 200 according to the embodiment. The object detection device 200 according to the present embodiment includes the transmission/reception unit 21 and an arithmetic unit 210. The arithmetic unit 210 includes an extraction unit 201, an analysis unit 202, and a calculation unit 203.

These functional configuration elements can be realized, for example, by cooperation of hardware configuration elements of the object detection device 200 as illustrated in Fig. 2 and software configuration elements such as firmware and a program. Furthermore, at least some of these functional configuration elements may be realized by dedicated hardware.

The extraction unit 201 acquires the waveform of the transmission wave transmitted by the transmission/reception unit 21. The extraction unit 201 extracts, on the basis of a frequency-analyzed waveform obtained by a frequency analysis performed by the analysis unit 202, the transmission reverberation frequency based on the waveform in the reverberation period of the transmission wave. Specifically, the waveform in the reverberation period of the transmission wave is Fourier-transformed to extract the transmission reverberation frequency whose frequency change becomes within a predetermined range.

Next, the extraction unit 201 extracts the reception wave in which the amplitude value of the reception wave (reflected wave) is equal to or larger than the detection threshold value Ith. The extraction unit 201 extracts, out of the reception wave, the reception reverberation signal whose amplitude value is located after the peak. The extraction unit 201 extracts, on the basis of a frequency-analyzed waveform obtained by a frequency analysis performed by the analysis unit 202, the reception reverberation frequency based on the waveform in the reverberation period of the reception wave. Specifically, the waveform of the reception reverberation signal is Fourier-transformed to extract the reception reverberation frequency at which the frequency change becomes within a predetermined range.

The analysis unit 202 performs a predetermined frequency analysis using the waveform of the transmission wave acquired by the extraction unit 201. In addition, the analysis unit 202 performs a frequency analysis on the reception reverberation signal extracted by the extraction unit 201. The frequency analysis is based on, for example, the fast Fourier transform (FFT).

The calculation unit 203 performs threshold processing on the reception wave acquired from the transmission/reception unit 21 after a previously set measurement period has elapsed. The threshold processing determines, for example, a peak at which the amplitude value of the reception wave is equal to or larger than the detection threshold value Ith.

The calculation unit 203 calculates a difference between the transmission reverberation frequency of the transmission wave extracted by the extraction unit 201 and the reception reverberation frequency of the reception wave. The calculation unit 203 transmits to the ECU 100 the Doppler shift amount calculated using the transmission reverberation frequency and the reception reverberation frequency.

The ECU 100 calculates the relative speed with respect to the object on the basis of the Doppler shift amount acquired from the object detection device 200.

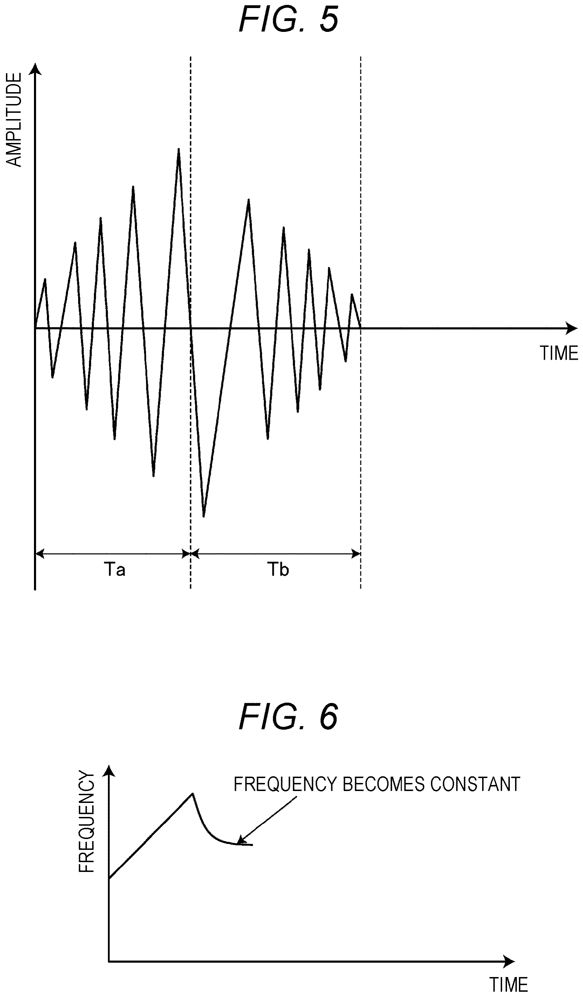

With reference to Figs. 5 and 6, calculation of the reverberation frequencies will be described. Fig. 5 is a diagram illustrating an example of the transmission waveform according to the embodiment. Fig. 6 is a diagram illustrating an example of the frequency-analyzed waveform according to the embodiment.

In the transmission waveform illustrated in Fig. 5, the horizontal axis represents time, and the vertical axis represents amplitude. Fig. 5 illustrates the amplitude of the transmission wave in the transmission period and the reverberation period. The amplitude of the transmission wave in the transmission period increases with time. The amplitude of the transmission wave in the reverberation period decreases with time.

Next, Fig. 6 illustrates the frequency-analyzed waveform obtained by performing a frequency analysis on the transmission waveform illustrated in Fig. 5. In the frequency-analyzed waveform illustrated in Fig. 6, the horizontal axis represents time, and the vertical axis represents frequency.

As illustrated in Fig. 6, an example of the transmission wave is a chirp wave whose frequency repeatedly increases or decreases every predetermined cycle. For example, the transmission wave is an up chirp whose frequency increases.

The extraction unit 201 extracts from the frequency-analyzed waveform the transmission reverberation frequency corresponding to the reverberation period. For example, the extraction unit 201 extracts a transmission reverberation frequency whose frequency change has become within a certain range. Specifically, the extraction unit 201 extracts a transmission reverberation frequency whose frequency change has become within a predetermined range.

By using a chirp wave as the transmission wave, a distance resolution can be improved. That is, discrimination performance between a plurality of objects can be improved. In addition, discriminability between a plurality of transmission/reception units 21 can be improved.

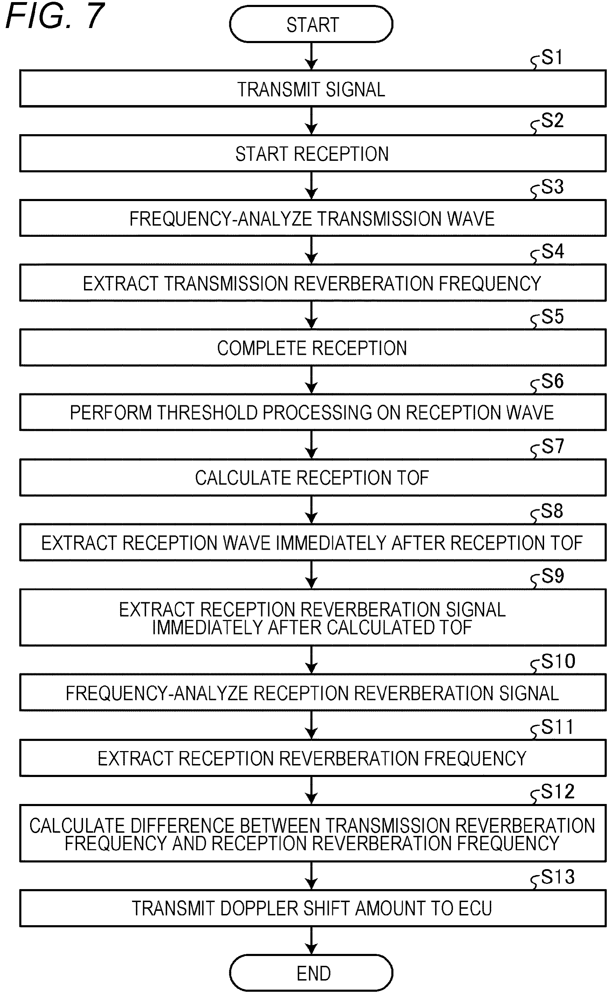

Fig. 7 is a flowchart illustrating the Doppler shift amount calculation processing according to the embodiment. As illustrated in Fig. 7, the transmission/reception unit 21 of the object detection device 200 transmits as a transmission signal a transmission wave of an ultrasonic wave (step S1).

The transmission/reception unit 21 starts reception simultaneously with the transmission of the transmission wave (step S2). The extraction unit 201 acquires a waveform of the transmission wave. The analysis unit 202 performs a predetermined frequency analysis by using the waveform of the transmission wave (step S3).

The extraction unit 201 extracts the transmission reverberation frequency based on the waveform in the reverberation period of the transmission wave on the basis of the frequency-analyzed waveform obtained by the frequency analysis performed by the analysis unit 202 (step S4).

By the processing of steps S3 and S4, the transmission reverberation frequency of the transmission wave is extracted at the time of measurement of low-speed traveling of a moving body or the like. Note that the processing of steps S3 and S4 may be omitted by previously determining the transmission reverberation frequency of the transmission wave. As a result, a calculation time of the transmission reverberation frequency can be shortened.

When a previously set measurement time has elapsed, the transmission/reception unit 21 completes the reception of the reception wave (step S5). The calculation unit 203 performs a threshold processing on the reception wave acquired from the transmission/reception unit 21 (step S6).

The calculation unit 203 calculates a peak at which the amplitude value of the reception wave determined by the threshold processing is equal to or larger than the detection threshold value Ith. The calculation unit 203 calculates the distance from the object detection device 200 to the object by using timing at which the amplitude value of the reception wave is at the peak and timing at which the transmission of the transmission wave is completed (a reception time of flight (TOF) is calculated) (step S7).

The extraction unit 201 extracts the reception wave (that is, the reception wave immediately after the reception TOF) in which the amplitude value of the reception wave is equal to or larger than the detection threshold value Ith (step S8). The extraction unit 201 extracts a reception reverberation signal in the reverberation period (that is, immediately after the calculated TOF) of the reception wave (step S9).

The analysis unit 202 performs a frequency analysis on the reception reverberation signal extracted by the extraction unit 201 (step S10).

The extraction unit 201 extracts the reception reverberation frequency based on the waveform in the reverberation period of the reception wave on the basis of the frequency-analyzed waveform obtained by the frequency analysis performed by the analysis unit 202 (step S11).

The calculation unit 203 calculates a difference between the transmission reverberation frequency of the transmission wave extracted by the extraction unit 201 and the reception reverberation frequency of the reception wave (step S12).

The calculation unit 203 transmits to the ECU 100 a Doppler shift amount calculated using the transmission reverberation frequency and the reception reverberation frequency (step S13).

### [Summary of present embodiment]

The present embodiment includes at least the following configuration.

An object detection device (200) of an embodiment is an object detection device (200) mounted on a moving body and includes: a transmission/reception unit (21) that transmits a transmission wave of an ultrasonic wave and receives a reception wave including a reflected wave based on the transmission wave; and a calculation unit (203) that calculates a Doppler shift amount by using a transmission reverberation frequency based on a waveform in a reverberation period of the transmission wave and a reception reverberation frequency based on a waveform in a reverberation period of the reception wave.

With this configuration, by calculating the Doppler shift amount using the reverberation frequencies of the transmission wave and the reception wave, estimation accuracy of the Doppler shift amount can be improved. This improves also detection accuracy of the relative speed between the moving body and the object.

In the object detection device (200) of the embodiment, for example, the calculation unit (203) calculates the reverberation frequencies at a time of measurement, and calculates the Doppler shift amount using the calculated reverberation frequencies. With this configuration, since the reverberation frequencies are calculated at the time of measurement, the calculation accuracy of the reverberation frequencies can be improved.

In the object detection device (200) of the embodiment, for example, the calculation unit (203) calculates the Doppler shift amount by using a predetermined reverberation frequency. With this configuration, for example, a calculation time of the transmission reverberation frequency can be shortened.

In the object detection device (200) of the embodiment, for example, the transmission wave is a chirp wave whose frequency repeatedly increases or decreases every predetermined cycle. According to this configuration, a distance resolution can be improved by using the chirp wave as the transmission wave. That is, discrimination performance between a plurality of objects can be improved. In addition, discriminability between a plurality of transmission/reception units (21) can be improved.

A program for causing a computer (for example, the processor 223 of the control unit 220, the processor 130 of the ECU 100, or the like) to perform processing for realizing various functions in the above embodiment can be provided by being recorded in a computer-readable recording medium such as a compact disc (CD)-ROM, a flexible disk (FD), a CD-Recordable (R), and a digital versatile disk (DVD) as a file in an installable format or an executable format. Furthermore, the program may be provided or distributed via a network such as the Internet.

In the above, the description has been given to the embodiment and the modified examples of the present disclosure; however, the above-mentioned embodiment and the modified examples are merely examples and are not intended to limit the scope of the disclosure. The above-mentioned novel embodiment and the modified examples can be performed in various aspects; and various omissions, substitutions, and changes can be made without departing from the gist of the disclosure. The above-mentioned embodiment and modified examples are included in the scope and gist of the disclosure and are included in the disclosure described in the claims and in the scope equivalent to the claims.

## Claims

1. An object detection device (200) mounted on a moving body, the object detection device (200) comprising:
a transmission/reception unit (21) that transmits a transmission wave of an ultrasonic wave and receives a reception wave including a reflected wave based on the transmission wave; and
a calculation unit (203) that calculates a Doppler shift amount by using a transmission reverberation frequency based on a waveform in a reverberation period of the transmission wave and a reception reverberation frequency based on a waveform in a reverberation period of the reception wave.

2. The object detection device (200) according to Claim 1, wherein the calculation unit (203) calculates the transmission reverberation frequency at a time of measurement, and calculates the Doppler shift amount by using the calculated transmission reverberation frequency.

3. The object detection device (200) according to Claim 1, wherein the calculation unit (203) calculates the Doppler shift amount by using the transmission reverberation frequency that is previously determined.

4. The object detection device (200) according to any one of Claims 1 to 3, wherein the transmission wave is a chirp wave whose frequency is repeatedly increase or decrease every predetermined cycle.

5. A program for causing a computer to control an object detection device (200) mounted on a moving body, the program is for causing the computer to function as:
a transmission/reception unit (21) that transmits a transmission wave of an ultrasonic wave and receives a reception wave including a reflected wave based on the transmission wave; and
a calculation unit (203) that calculates a Doppler shift amount by using a transmission reverberation frequency based on a waveform in a reverberation period of the transmission wave and a reception reverberation frequency based on a waveform in a reverberation period of the reception wave.
